# EUROPÄISCHE PATENTSCHRIFT

(11) **EP 2 556 946 B1**
(45) Veröffentlichungstag und Bekanntmachung des Hinweises auf die Patenterteilung: **01.10.2014**
(21) Anmeldenummer: 12179812.8
(22) Anmeldetag: 09.08.2012
(51) Int. Cl.: B29C 70/44, B29C 70/54, B29L 31/30

(54) **Vorrichtung zur urformtechnischen Herstellung eines integralen Strukturbauteils aus einem mit Stringern verstärkten Faserverbundwerkstoff**
Device for primary shaping of an integral structural component from a with stringer reinforced composite material
Dispositif destiné à la fabrication par technique de moulage d'un composant structurel intégral à partir d'une matière première composite en fibres renforcée par des lisses

(30) Priorität: 11.08.2011 DE 102011109977; 11.08.2011 US 201161522341 P
(43) Veröffentlichungstag der Anmeldung: 13.02.2013
(73) Patentinhaber: Airbus Operations GmbH, 21129 Hamburg (DE)
(72) Erfinder: Barlag, Carsten, 26441 Jever (DE); Jacob, Torben, 21643 Beckdorf (DE); Dorawa, Tobias, 20535 Hamburg (DE); Gillessen, Alexander, 21680 Stade (DE)
(74) Vertreter: Maiwald Patentanwalts GmbH

(56) Entgegenhaltungen:
- FR-A1- 2 676 960
- US-A1- 2006 108 058

## Beschreibung

### Gebiet der Erfindung

Die Erfindung betrifft eine Vorrichtung zur urformtechnischen Herstellung eines integralen Strukturbauteils aus einem mit Stringern verstärkten Faserverbundwerkstoff für ein Flugzeug, umfassend ein eine Montagefläche bildendes Formteil zur Schaffung einer Außen- oder Innenoberfläche des Strukturbauteils, worauf mindestens ein Kanal zur Evakuierung des mit einer Vakuumfolie bedeckten, aus einem Hautlaminat und mehreren beabstandet zueinander verlaufenden Stringern bestehenden Strukturbauteils angeordnet ist.

Das Einsatzgebiet der Erfindung erstreckt sich auf die Fertigung von Strukturbauteilen für Flugzeuge, insbesondere Verkehrsflugzeuge mit großvolumigen Rümpfen. Derartige Rümpfe werden meist in Schalenbauweise gefertigt, wobei eine innenliegende Verstärkungsstruktur eine sogenannte Hautschale trägt, welche die Außenoberfläche des Rumpfes bildet. Die innenliegende Verstärkungsstruktur besteht gewöhnlich aus längsverlaufenden Stringern und quer hierzu in etwa ringförmig verlaufenden Spanten, welche innenliegend auf der Hautschale befestigt sind. Bei den hier interessierenden modernen Fertigungstechnologien werden im Zuge der Fertigung der Hautschale zumindest die Stringer hiermit stoffschlüssig verbunden, so dass separate Befestigungsmittel - wie Nieten - zum Verbinden der Stringer mit der Hautschale entfallen können. Hierfür kommen neben T-Stringer auch sogenannte Omega-Stringer zum Einsatz, welche das Querschnittsprofil der Stringer kennzeichnen.

Es sei darauf hingewiesen, dass unter dem Begriff Stringer im Rahmen der vorläufigen Erfindung nicht allein ein Flugzeugbauteil zu verstehen ist. Die erfindungsgemäße Lösung lässt sich vielmehr auch außerhalb des Flugzeugbaus einsetzen, beispielsweise in der Automobilindustrie oder dem Windanlagenbau, also prinzipiell überall dort, wo gattungsgemäß großflächige stringerverstärkte Strukturbauteile zum Einsatz kommen.

Die vorliegende Erfindung lässt sich bei herkömmlichen Aushärteverfahren unter Unterdruck für Faserverstärkte Kunststoffe, wobei die Haut mit den Stringerprofien direkt auf einer Laminierklebevorrichtung (LKV) aufgebaut werden verwenden, sowie bei erweiterten Verfahren (AutoVac) mit Aufrüstträgern und nachfolgender Übergabe auf die LKV.

Das vorstehend erwähnte AutoVac-Herstellungsverfahren ist eine technische Lösung zur automatischen Positionierung von Vakuumfolie, Hilfsstoffen und Stringerprofilen mit Hilfe einer hier interessierenden Vorrichtung. Die maßgeblichen Vorteile des AutoVac-Herstellungsverfahrens sind der hohe Grad der Genauigkeit und deren Reproduzierbarkeit. Das AutoVac-Herstellungsverfahren kann sowohl für Prepreg- als auch Trockenfaser-Herstellungsprozesse angewendet werden. Bei einer bei diesem Herstellungsverfahren angewendet Harzinfusion in einer auf dem Montagefläche aufgelegte Hautlaminatschicht werden diese trockenen Faserhalbzeuge mit dem Harz als Matrixmaterial getränkt und anschließend ausgehärtet. Das zunächst flüssige Harz wird mittels Unterdruck in das Faserhalbzeug gebracht. Daher muss die das Faserhalbzeug aufnehmende Vorrichtung gegenüber dem Umgebungsdruck mit einer Vakuumfolie abgedichtet werden. Unter erhöhter Temperatur und Vakuum reagiert das in der Vorrichtung befindliche Harz und das Strukturbauteil entsteht.

### Hintergrund der Erfindung

Aus der Druckschrift US 2006/0108058 A1 geht eine Vorrichtung zur umformtechnischen Herstellung eines integralen Strukturbauteils aus einem mit Stringern verstärkten Faserverbundwerkstoff hervor gemäß dem Oberbegriff des Anspruchs 1. Dieses umfasst ein Formteil, welches eine Montagefläche zur Schaffung einer Außen- oder Innenoberfläche des Strukturbauteils bildet. Hierauf sind eine Vielzahl von Kanäle zur Evakuierung des mit einer Vakuumfolie bedeckten, aus einem Hautlaminat und mehreren beabstandet zueinander verlaufenden Stringern bestehenden Strukturbauteils angeordnet. Die gesamte Oberfläche zwischen den benachbarten Stringern ist mit einem Hilfsstoffstreifen belegt, der aus einem an der Vakuumfolie zur Anlage kommenden textilen Belüftungsflies und einer Trennfolie besteht.

Aus dem Dokument FR 2 676 960 A1 geht ein Laminat von Materialien für eine Anhebung und ein Pumpen in der Herstellung von Verbundmaterialien hervor. Das Laminat umfasst ein Material zum Anheben, eine luftdurchlässige Bahn, die einem Belüftungsvlies ähnelt, und ein Material zum Pumpen, die übereinander auf einer Trennfolie angeordnet sind. Die Trennfolie weist eine Breite auf, die größer oder gleich ist als die Breite der luftdurchlässigen Bahn. Ferner sind die Trennfolie und die luftdurchlässige Bahn vorkonfektioniert und fest miteinander verbunden. Der Vorteil besteht darin, dass die einzelnen Materialschichten, wie die luftdurchlässige Bahn und separate Trennmittel nicht gesondert zugeschnitten werden müssen.

Aus der DE 103 31 358 A1 geht eine Vorrichtung zur urformtechnischen Herstellung eines integralen Strukturbauteils aus faserverstärktem Verbundwerkstoff mit integrierten Stringern nach dem AutoVac-Herstellungsverfahren hervor. Ein nach außen gewölbtes Aufrüst-Formteil zum Positivaufrüsten besitzt eine Montagefläche, welche durch einen Ringkanal eingeschlossen ist, und die durch eine lose aufliegende Folie abgedeckt ist.

Über den Ringkanal wird die Folie an die Kontur der Montagefläche, welche Profilnuten zur Aufnahme von Stringerprofilen aufweist, angesaugt. Nach Erreichen eines ausreichenden Vakuums wird eine Rolle mit der eigentlichen Vakuumhaut mit einer Rolle der Folie derart gekoppelt, dass auf kurze Distanz die Folie aufgerollt und in die Vakuumhaut auf die Montagefläche abgerollt wird. Durch eine geringe Rückhaltekraft an der Vakuumhaut wird diese formgetreu in die Profilnuten eingezogen. Anschließend werden alle Stringer in die von der Vakuumfolie abgedeckten Profilnuten eingelegt und alle Hautlaminatschichten werden hierauf aufgelegt. Nachfolgend wird ein Harz auf die äußere Hautlaminatschicht aufgetragen und ein Laminier-Klebe-Formteil wird passgenau aufgelegt und das Harz wird so vorverdichtet, dass eine vakuumdichte Versiegelung zwischen der Vakuumhaut und dem Laminier-Klebe-Formteil entsteht. Danach wird die Kavität zwischen der Vakuumhaut und dem Laminier-Klebe-Formteil evakuiert. Nach Erreichen des vorgesehenen Prozessvakuums in der Kavität zwischen der Vakuumhaut und dem Laminier-Klebe-Formteil wird das Vakuum abgeschaltet und das Laminier-Klebe-Formteil angehoben und gedreht. Nach dem Drehen des Laminier-Klebe-Formteils wird das so vorgefertigte Strukturbauteil einen Injektionsprozess und einer Härtung zugeführt, beispielsweise in einem Autoklaven unter Prozessvakuum eingebracht.

Zur Durchführung der Aushärtung eines Kunststoffbauteils unter Unterdruck sind innerhalb der Vorrichtung zwischen der Vakuumfolie und dem Hautlaminat Zwischenhohlräume erforderlich, um den Unterdruck gleichmäßig über die gesamte Bauteilfläche zu verteilen und so die Gasführung sicher zu ermöglichen. Diese Zwischenhohlräume werden gewöhnlich durch manuell zugeschnittene sogenannte Belüftungsvliesse, die aus einem textilen Material bestehen gebildet. Um ein Eindringen von Harz in das Textilbelüftungsvliess zu vermeiden, sind Trenngrenzschichten vorzusehen.

Nachteilhaft bei der Verwendung solcher Hilfsstoffe im Rahmen der erfindungsgemäßen Vorrichtung sind die Fehlerquellen beim manuellen Zuschnitt, da die Hilfsstoffe in der Praxis von einzelnen Materialrollen grob abgeschnitten und direkt an der Vorrichtung auf Maß zugeschnitten werden. Eine Reproduzierbarkeit und Prozess-Robustheit ist bei manuellem Zuschnitt der Einzelteile schwer erreichbar.

### Kurzbeschreibung der Erfindung

Es ist daher die Aufgabe der vorliegenden Erfindung eine Vorrichtung zur urformtechnischen Herstellung eines integralen Strukturbauteils unter Verwendung von Hilfsstoffen für den Vakuumaufbau zu schaffen, mit welcher eine einfache und reproduzierbar sichere Fertigung des Strukturbauteils möglich ist.

Die Aufgabe wird ausgehend von einer Vorrichtung gemäß dem Oberbegriff von Anspruch 1 in Verbindung mit dessen kennzeichnenden Merkmal gelöst. Die nachfolgenden abhängigen Ansprüche geben vorteilhafte Weiterbildungen der Erfindung wieder.

Die Erfindung schließt die technischen Lehre ein, dass zumindest Flächenabschnitte zwischen benachbarten Profilen im Bereich der Montagfläche mit einem speziellen Hilfsstoffstreifen belegt sind, der aus einem an der Vakuumfolie zur Anlage kommenden textilen Belüftungsvlies und einer vorkonfektioniert fest hiermit verbundenen Trennfolie besteht, deren Breite größer ist als die Breite des Belüftungsvliesses.

Der Vorteil der erfindungsgemäßen Lösung liegt insbesondere darin, dass einzelne Hilfsstoff-Komponenten, wie Belüftungsvlies und separate Trennmittel nicht manuell zugeschnitten werden brauchen, sondern vorkonfektioniert vorliegen, so dass sich diese schnell und präzise auf die Vorrichtung platzieren lassen. Hierdurch vereinfacht sich insbesondere die Handhabung durch einen robusten Aufbau und einer geringen Anzahl von Einzelzuschnitten. Dies führt zu einer Vermeidung von Montagefehlern und zu einer hohen Reproduzierbarkeit der Bauteilqualität. Der Zuschnitt der Hilfsstoffe und das Verbinden derselben muss nicht direkt an der Vorrichtung durchgeführt werden, so dass das Fehlerrisiko bei der Bestückung der Vorrichtung sinkt. Darüber hinaus ermöglicht die Verwendung des erfindungsgemäß vorkonfektionierten Hilfstoffstreifens eine einfache und eindeutig definierte Positionierung relativ zur Vorrichtung.

Gemäß einer die Erfindung verbessernden Maßnahme ist die Trennfolie beidseitig überlappend koaxial auf dem Belüftungsvlies angeordnet. Die hierdurch geschaffenen beidseitigen Überlappungsbereiche der Trennfolie im Bereich von vorzugsweise 0 bis 10 mm ermöglichen eine einfache Selbstzentrierung zwischen benachbarten Stringern, erfüllen eine Dichtlippenfunktion im Zusammenwirken mit der Vakuumfolie und vermeiden, dass Harz in das textile Belüftungsvlies eindringt, was die Evakuierung behindern würde.

Zur Erfüllung der vorstehend angeführten Funktionen der Trennfolie und des Belüftungsvliesses wird vorgeschlagen, dass die Trennfolie aus einem Kunststoffmaterial vorzugsweise eine ETFE-Folie (ETFE = Ethylen-Tetrafluorethylen) und dass das Belüftungsvliess aus einem Polyester- oder Nylon-Material besteht.

Zur einfachen Vorkonfektionierung des Belüftungsvlieses mit der Trennfolie, wird vorgeschlagen, dass das Belüftungsvlies auf die Trennfolie aufgeklebt wird, so dass eine stoffschlüssige Verbindung zwischen den beiden Bauteilen besteht. Der exakt vorkonfektionierte Hilfsstoffstreifen lässt sich in Form von Rollen gebrauchsfertig bereitstellen.

Gemäß der Erfindung weist die Trennfolie mindestens eine Öffnung zur Weiterleitung des Vakuums an quer zum Hilfsstoffstreifen angeordneten weiterführenden Hilfsstoffstreifen auf. Diese weiterführenden Hilfsstoffstreifen können zum Belegen von Randbereichen der Montagefläche dienen und sorgen für einen gleichmäßig flächigen Unterdruck auf die Montagefläche, ohne dass zu diesem Zweck auf der Montagefläche selbst weitere Verbindungskanäle geschaffen werden müssen.

Die erfindungsgemäße Lösung lässt sich sowohl anwenden auf nach innen gewölbten Laminier-Klebe-Formteilen als auch auf nach außen gewölbten Aufrüst-Formteilen, welche gewöhnlich im Rahmen des AutoVac-Herstellungsverfahrens zur Anwendung kommen.

Gemäß einer anderen die Erfindung verbessernden Maßnahme wird vorgeschlagen, dass auf der Trennfolienseite des Hilfsstoffstreifens mehrere Klebeelemente zum Ankleben des Hilfsstoffstreifens an das Bauteil, idealerweise an die schon ausgehärteten Verstärkungsprofile vorgesehen sind. Hierdurch lässt sich trotz Bewegung des Formteils oder bei senkrecht stehenden Teilen eine einfache Fixierung der Hilfsstoffstreifen an der Vorrichtung oder des Bauteils realisieren.

Gemäß einer anderen die Erfindung verbessernden Maßnahme wird vorgeschlagen, dass auf dem Vlies-Seite des Hilfsstoffstreifens mehrere Klebeelemente zum Ankleben des Hilfsstoffstreifens an die auf den Aufrüstträger aufgezogene Vakuumfolie vorgesehen sind. Hierdurch lässt sich trotz Bewegung des Aufrüstträgers oder bei senkrecht stehenden Teilen eine einfache Fixierung der Hilfsstoffstreifen an der Vorrichtung oder des Bauteils realisieren.

Erforderlichenfalls kann zwischen der Trennfolie des Hilfsstoffstreifens und dem Hautlaminat eine zusätzliche Abreißgewebeschicht eingelegt werden.

### Kurzbeschreibung der Zeichnung

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Vorrichtung zur Herstellung eines integralen Strukturbauteils mit einer nach innen gewölbten Montagefläche,
- Figur 2: eine Vorrichtung zur Herstellung eines Strukturbauteils mit einer nach außen gewölbten Montagefläche, und
- Figur 3: eine perspektivische Ansicht eines Abschnittes eines vorkonfektionierten Hilfsstoffstreifens.

### Detaillierte Beschreibung der Figuren

Trennfolie 10 besteht. Seitens der Trennfolie 10 ist dieser Hilfsstoffstreifen über ein Klebeelement 11 nach Einlegen in den zugeordneten Flächenabschnitt 8 fixiert. Dementsprechend verlaufen die Längskanten des Belüftungsvlieses 9 des Hilfsstoffstreifens entlang je einer bodenseitigen Längskante benachbarter Stringer 7a und 7b.

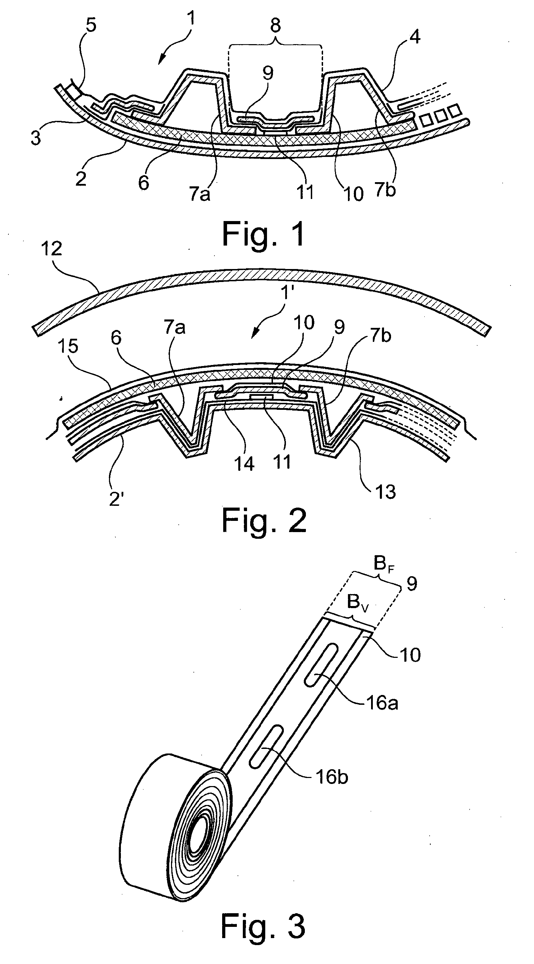

Gemäß Figur 2 weist ein Formteil 2' eine nach außen gewölbte Montagefläche 1' auf. Das Formteil 2' dient dem Positiv-Aufrüsten nach dem AutoVac-Verfahren und wirkt mit einem hierzu korrespondierenden Laminier-Klebe-Formteil 12 in an sich bekannter Weise zusammen.

Auf der Montagefläche 1' des Formteils 2' längs verlaufende Profilnuten 13 eingebracht, die der Aufnahme je eines Stringers 7a bzw. 7b dienen. Vor Einlegen der Stringer 7a und 7b in die Profilnuten 13 wird die Montagefläche 1' mit einer Vakuumfolie 14 zum Schutz der Montagefläche 1' versehen. Anschließend werden die aus Belüftungsvlies 9 und Trennfolie 10 bestehenden vorkonfektionierten Hilfsstoffstreifen zwischen den Stringern 7a und 7b platziert und mittels Klebeelement 11 fixiert. Anschließend werden die Stringer 7a und 7b in die Profilnuten 13 eingelegt und ein eine Deckschicht bildendes Hautlaminat 6 aus Faserverbundwerkstoff vervollständigt den Schichtaufbau des Strukturbauteils. Abschließend wird eine äußere Vakuumfolie 15 aufgebracht.

Die Figur 3 ein vorkonfektionierten Hilfsstoffstreifen mit Belüftungsvlies 9 und hieran angeklebter Trennfolie 10. Die Trennfolie 10 ist beidseitig überlappend mittig auf dem Belüftungsvlies 9 angeordnet und weist eine breite B_{F} auf, welche größer ist als die Breite Bv des Belüftungsvlieses 9.

Ferner weist die Trennfolie 10 mit am Endbereich 2 hintereinander liegende langgestreckte Öffnungen 16a und 16b auf welche der Weiterleitung des Vakuums an quer zu dem Hilfsstoffstreifen angeordnete - hier nicht weiter dargestellte - weitere Hilfsstoffstreifen leitet.

Der Hilfsstoffstreifen ist dargestellt in Rollenform bereitgestellt und lässt sich in einfacher Weise in den Zwischenraum zwischen benachbarten Stringern 7a und 7b des Strukturbauteils während der urformtechnischen Herstellung einlegen.

### Bezugszeichenliste

- 1: Montagefläche
- 2: Formteil
- 3: Kanal
- 4: Vakuumfolie
- 5: Dichtnaht
- 6: Hautlaminat
- 7: Stringer
- 8: Flächenabschnitt
- 9: Belüftungsvlies
- 10: Trennfolie
- 11: Klebeelement
- 12: Laminier-Klebe-Formteil
- 13: Profilnut
- 14: Vakuumfolie
- 15: Vakuumfolie
- 16: Öffnung

## Patentansprüche

1. Vorrichtung zur urformtechnischen Herstellung eines integralen Strukturbauteils aus einem mit Stringern (7a, 7b) verstärkten Faserverbundwerkstoff, umfassend mindestens ein eine Montagefläche (1) bildendes Formteil (2) zur Schaffung einer Außen- oder Innenoberfläche des Strukturbauteils, worauf mindestens ein Kanal (3) zur Evakuierung des mit einer Vakuumfolie (4) bedeckten, aus einem Hautlaminat (6) und mehreren beabstandet zueinander verlaufenden Stringern (7a, 7b) bestehenden Strukturbauteils angeordnet ist, wobei Flächenabschnitte (8) zwischen benachbarten Stringern (7a, 7b) mit einem Hilfsstoffstreifen belegt sind, **dadurch gekennzeichnet, dass** der Hilfsstoffstreifen aus einem an der Vakuumfolie (4) zur Anlage kommenden textilen Belüftungsvlies (9) und einer vorkonfektioniert fest hiermit verbundenen Trennfolie (10) besteht, deren Breite (B_{F}) größer oder gleich ist als die Breite (Bᵥ) des Belüftungsvlieses (9), wobei die Trennfolie (10) mindestens eine Öffnung (16a, 16b) zur Weiterleitung des Vakuums an quer zum Hilfsstoffstreifen angeordnete Hilfsstoffstreifen aufweist.

2. Vorrichtung nach Anspruch 1,
**dadurch gekennzeichnet, dass** die Trennfolie (10) beidseitig überlappend, mittig auf dem Belüftungsvlies (9) angeordnet ist.

3. Vorrichtung nach Anspruch 2,
**dadurch gekennzeichnet, dass** der beidseitige Überlappungsbereich der Trennfolie (10) gegenüber dem Belüftungsvlies (9) eine Breite von 0 bis 10 Millimetern aufweist.

4. Vorrichtung nach Anspruch 1,
**dadurch gekennzeichnet, dass** die Trennfolie (10) aus einem ETFE-Material besteht, und dass das Belüftungsvlies (9) aus einem Polyester- oder Nylonmaterial besteht.

5. Vorrichtung nach Anspruch 1,
**dadurch gekennzeichnet, dass** zur Vorkonfektionierung des Belüftungsvlieses (9) mit der Trennfolie (10), diese auf dem Belüftungsvlies (9) aufgeklebt ist.

6. Vorrichtung nach Anspruch 1,
**dadurch gekennzeichnet, dass** das Formteil (2) ein nach innen gewölbtes Laminier-Klebe-Formteil zum direkten Aufrüsten der Vorrichtung ist.

7. Vorrichtung nach Anspruch 1,
**dadurch gekennzeichnet, dass** das Formteil (2') ein nach außen gewölbtes Aufrüst-Formteil zum Positiv-Aufrüsten einer Vorrichtung ist, das mit einem hierzu korrespondierenden Laminier-Klebe-Formteil (12) zusammenwirkt.

8. Vorrichtung nach Anspruch 7,
**dadurch gekennzeichnet, dass** die Montagefläche (1') des Formteils (2') längsverlaufende Profilnuten (13) zur Aufnahme je eines Stringers (7a; 7b) aufweist.

9. Vorrichtung nach Anspruch 2,
**dadurch gekennzeichnet, dass** die Längskanten des Belüftungsvlieses (9) des Hilfsstoffstreifens entlang je einer bodenseitigen Längskante benachbarter Stringer (7a, 7b) verlaufend angeordnet sind, so dass der beidseitige Überlappungsbereich der Trennfolie (10) an einem abgewinkelten Flankenbereich des Stringers (7a; 7b) zur Anlage kommt.

10. Vorrichtung nach Anspruch 1,
**dadurch gekennzeichnet, dass** zur Fixierung des Hilfsstoffstreifens am Formteil (7') auf der Trennfolie (10) angeordnete Klebeelemente (11) zum Ankleben des Hilfsstoffstreifens an der Montagefläche (1, 1') vorgesehen sind.

11. Vorrichtung nach Anspruch 1,
**dadurch gekennzeichnet, dass** zwischen Trennfolie (10) und Hautlaminat (6) eine zusätzliche Abreissgewebeschicht angeordnet ist.

## Claims

1. A device for the master moulding technique production of an integral structural component made of a fibre composite material reinforced by stringers (7a, 7b), the device comprising at least one moulded part (2) forming a mounting surface (1) to create an exterior or an interior surface of the structural component, on which at least one channel (3) is arranged for evacuating the structural component which is covered with a vacuum film (4) and comprises a skin-like laminate (6) and a plurality of stringers (7a, 7b) disposed spaced apart from one another, wherein surface sections (8) between adjacent stringers (7a, 7b) are covered with an auxiliary stripe,
**characterized in that** the auxiliary stripe consists of a textile ventilation fleece (9) attached to the vacuum film (4) and a pre-assembled release film (10) firmly attached to the vacuum film (4), wherein the width (BF) of the release film (10) being greater than or equal to the width (BV) of the ventilation fleece (9), wherein the release film (10) comprises at least one opening (16a, 16b) for guiding the vacuum to auxiliary stripes arranged transversally to the auxiliary stripe.

2. The device according to claim 1,
**characterized in that** the release film (10) is arranged coaxially overlapping on both sides at the ventilation fleece (9).

3. The device according to claim 2,
**characterized in that** the overlapping area on both sides of the release film (10) has a width of from 0 to 10 millimetres compared to the ventilation fleece (9).

4. The device according to claim 1,
**characterized in that** the release film (10) comprises an ETFE material and the ventilation fleece (9) comprises a polyester or a nylon material.

5. The device according to claim 1,
**characterized in that** the release film (10) is bonded to the ventilation fleece (9) for pre-assembling the ventilation fleece (9) with the release film (10).

6. The device according to claim 1,
**characterized in that** the moulded part (2) is a concave laminated adhesive moulded part for direct mounting of the device.

7. The device according to claim 1,
**characterized in that** the moulded part (2') is a convex moulded part for positive mounting of a device, and is configured to co-act with a corresponding laminated adhesive moulded part (12).

8. The device according to claim 7,
**characterized in that** the mounting surface (1') of the moulded part (2') comprises a plurality of longitudinal profile grooves (13) to receive one stringer (7a, 7b) each.

9. The device according to claim 2,
**characterized in that** the longitudinal edges of the ventilation fleece (9) of the auxiliary stripe are arranged along one bottom-sided longitudinal edge of each of adjacent stringers (7a, 7b) such that the overlapping area on both sides of the release film (10) is applied at an angled edge area of the stringer (7a, 7b).

10. The device according to claim 1,
**characterized in that** adhesive elements (11) are provided at the release film (10) for fastening the auxiliary stripe to the moulded part (2') at the mounting surface (1, 1').

11. The device according to claim 1,
**characterized in that** an additional layer of peel ply is arranged between the release film (10) and the skin-like laminate (6).

## Revendications

1. Dispositif pour la fabrication par formage primaire d'un composant de structure intégral en un matériau composite de fibres renforcé par des raidisseurs (7a, 7b), comprenant au moins une pièce moulée (2), formant une surface de montage (1), pour créer une surface extérieure ou une surface intérieure du composant de structure, où au moins un canal (3) est disposé pour l'évacuation du composant de structure, recouvert d'une feuille sous vide (4) et constitué d'un stratifié de peau (6) et de plusieurs raidisseurs (7a, 7b) distants les uns des autres, des sections de surface (8) entre des raidisseurs voisins (7a, 7b) étant garnies d'un ruban d'accessoire, **caractérisé en ce que** le ruban d'accessoire est constitué d'un non-tissé d'aération textile, arrivant au contact de la feuille sous vide (4), et d'une feuille de séparation (10) pré-conditionnée fixement avec ce dernier, feuille dont la largeur (B_{F}) est supérieure ou égale à la largeur (B_{V}) du non-tissé d'aération (9), la feuille de séparation (10) présentant au moins une ouverture (16a, 16b) pour le transfert du vide à des rubans d'accessoire disposés transversalement au ruban d'accessoire.

2. Dispositif selon la revendication 1, **caractérisé en ce que** la feuille de séparation (10) est disposée en chevauchement bilatéral, de façon centrale sur le non-tissé d'aération (9).

3. Dispositif selon la revendication 2, **caractérisé en ce que** la zone de chevauchement bilatéral de la feuille de séparation (10) présente une largeur de 0 à 10 millimètres en vis-à-vis du non-tissé d'aération (9).

4. Dispositif selon la revendication 1, **caractérisé en ce que** la feuille de séparation (10) est constituée d'un matériau ETFE, et que le non-tissé d'aération (9) est constitué de polyester ou de nylon.

5. Dispositif selon la revendication 1, **caractérisé en ce que**, pour le pré-conditionnement du non-tissé d'aération (9) avec la feuille de séparation (10), cette dernière est collée sur le non-tissé d'aération (9).

6. Dispositif selon la revendication 1, **caractérisé en ce que** la pièce moulée (2) est une pièce moulée collée - laminée cintrée vers l'intérieur pour l'équipement direct du dispositif.

7. Dispositif selon la revendication 1, **caractérisé en ce que** la pièce moulée (2') est une pièce moulée d'équipement cintrée vers l'extérieur pour l'équipement positif d'un dispositif, laquelle pièce coopère avec une pièce moulée collée - laminée (12) correspondante à cette dernière.

8. Dispositif selon la revendication 7, **caractérisé en ce que** la surface de montage (1') de la pièce moulée (2') présente des gorges profilées longitudinales (13) pour recevoir chacune un raidisseur (7a ; 7b).

9. Dispositif selon la revendication 2, **caractérisé en ce que** les arêtes longitudinales du non-tissé d'aération (9) du ruban d'accessoire s'étendent respectivement le long d'une arête longitudinale du côté fond de raidisseurs voisins (7a, 7b), de sorte que la zone de chevauchement bilatérale de la feuille de séparation (10) arrive au contact d'une zone de flanc coudée du raidisseur (7a ; 7b).

10. Dispositif selon la revendication 1, **caractérisé en ce que**, pour la fixation du ruban d'accessoire sur la pièce moulée (2'), des éléments adhésifs (11), disposés sur la feuille de séparation (10), sont prévus pour coller le ruban d'accessoire sur la surface de montage (1 ; 1').

11. Dispositif selon la revendication 1, **caractérisé en ce qu'**une couche de tissu de déchirure supplémentaire est disposée entre la feuille de séparation (10) et le stratifié de peau (6).
